# EUROPÄISCHE PATENTSCHRIFT

(11) **EP 3 713 021 B1**
(45) Veröffentlichungstag und Bekanntmachung des Hinweises auf die Patenterteilung: **21.07.2021**
(21) Anmeldenummer: 20161687.7
(22) Anmeldetag: 09.03.2020
(51) Int. Cl.: H01T 4/06

(54) **ÜBERSPANNUNGSSCHUTZGERÄT MIT SPANNUNGSABGRIFF**
OVERVOLTAGE PROTECTION DEVICE WITH VOLTAGE TAP
APPAREIL DE PROTECTION CONTRE LES SURTENSIONS POURVU DE PRISE DE TENSION

(30) Priorität: 18.03.2019 DE 102019106737
(43) Veröffentlichungstag der Anmeldung: 23.09.2020
(73) Patentinhaber: DEHN SE + Co KG, 92318 Neumarkt / Opf. (DE)
(72) Erfinder: STRANGFELD, Uwe, 92318 Neumarkt (DE); HIERL, Stephan, 92318 Neumarkt (DE); LEIBIG, Bernd, 92318 Neumarkt (DE); SPANGLER, Patrick, 92318 Neumarkt (DE)
(74) Vertreter: Prinz & Partner mbB

(56) Entgegenhaltungen:
- DE-U1-202004 011 908
- DE-U1-202018 100 941
- DE-U1-202018 105 277
- Montageanleitung: "Einspeiseadapter (ESA) für Sammelschienen", , 30. Juni 2017 (2017-06-30), Seiten 1-4, XP055717438, Gefunden im Internet: URL:https://www.hager.de/files/download/0/ 13896775_1/0/6LE002163C.PDF [gefunden am 2020-07-23]

## Beschreibung

Die Erfindung betrifft ein Überspannungsschutzgerät zur Installation an einem Sammelschienensystem gemäß dem Oberbegriff von Patentanspruch 1.

Aufgrund jüngst in Kraft getretener Normen wird die Installation von Smart-Meter-Gateways (SMG) zur intelligenten Erfassung von Verbraucherdaten für Endkunden von Energieversorgungsunternehmen verpflichtend. Da die Daten sowie das SMG im Besitz des Energieversorgungsunternehmens sind, muss die Spannungsversorgung für das SMG durch das Energieversorgungsunternehmen im Vorzählerbereich (UAR) abgegriffen werden. Um im Fehlerfall das SMG zu schützen, müssen diese durch separate Sicherungen geschützt werden

Alle großen Hersteller von Niederspannungsschutzkomponenten bieten hierzu bereits Lösungsansätze in Form von dezidierten Leitungsschutzschaltern, Schmelzsicherungen oder Feinsicherungen an. Diese müssen jedoch zusätzlich separat installiert werden und schränken somit die bereits knappen Platzverhältnisse weiter ein. Um der Elektrofachkraft die Installation auf einem typischen 40mm-Schienensystem, welches nur in Deutschland für den unteren Anschlussraum des Zählerschranks vorgeschrieben ist, weiter zu erleichtern, bieten Hersteller nun außer den herkömmlichen Sammelschienenklemmen komfortablere Einspeiseadapter (ESA) (z.B. Hager K96ESA5) an. Da der Platz im unteren Anschlussraum nicht größer wird, jedoch immer mehr Geräte in diesem Installationsumfeld verbaut werden sollen, gestaltet sich die Montage und Verdrahtung der so erforderlichen Komponenten für den Installateur in der Praxis als äußerst schwierig.

Aus der DE 20 2018 100 941 U1 ist eine Überspannungsableiteranordnung bekannt, die einen Kupplungsbereich und NH-Normgrifflaschen aufweist, über die Mess- oder Kontrollarbeiten durchgeführt werden können, wobei die NH-Normgrifflaschen spannungsführend sein können.

Im Lichte der obigen Ausführungen ist es Aufgabe der vorliegenden Erfindung, eine Spannungsversorgung für Zähler- und Messvorrichtungen im Vorzählerbereich bereitzustellen, die platzsparend und einfach zu installieren ist und auch über einen Überspannungsschutz verfügt.

Die Aufgabe wird durch ein Überspannungsschutzgerät gemäß Anspruch 1 gelöst. Vorteilhafte Ausgestaltungen ergeben sich aus den Unteransprüchen.

Ein Kerngedanke der vorliegenden Erfindung besteht darin, den für die Spannungsversorgung des SMGs benötigten Spannungsabgriff in das Überspannungsschutzgerät zu integrieren, das ohnehin im Vorzählerbereich benötigt wird. Somit wird keine separate Komponente für die Spannungsversorgung des SMGs benötigt, wodurch Platz im Vorzählerbereich eingespart werden kann. Gleichzeitig kann in dem Überspannungsschutzgerät ein Überspannungsschutz für das SMG bereitgestellt werden, so dass hierfür keine weitere, separate Komponente erforderlich wird.

Insgesamt ist mit dem erfindungsgemäßen Überspannungsschutzgerät eine platzsparende und einfach zu installierende Lösung für die Spannungsversorgung des SMG geschaffen, mit der zudem gleichzeitig ein Überspannungsschutz für das SMG bereitgestellt werden kann.

Die Erfindung wird im Folgenden auch hinsichtlich weiterer Merkmale und Vorteile anhand eines Ausführungsbeispiels beschrieben, das anhand der Figuren näher erläutert wird. Hierbei zeigen:
Fig. 1 eine perspektivische Ansicht eines erfindungsgemäßen Überspannungsschutzgeräts;
Fig. 2 eine weitere perspektivische Ansicht des Überspannungsschutzgeräts aus Fig. 1;
Fig. 3 eine Ansicht des Überspannungsschutzgeräts aus Fig. 1 mit einer angrenzend angeordneten Einspeiseschiene;

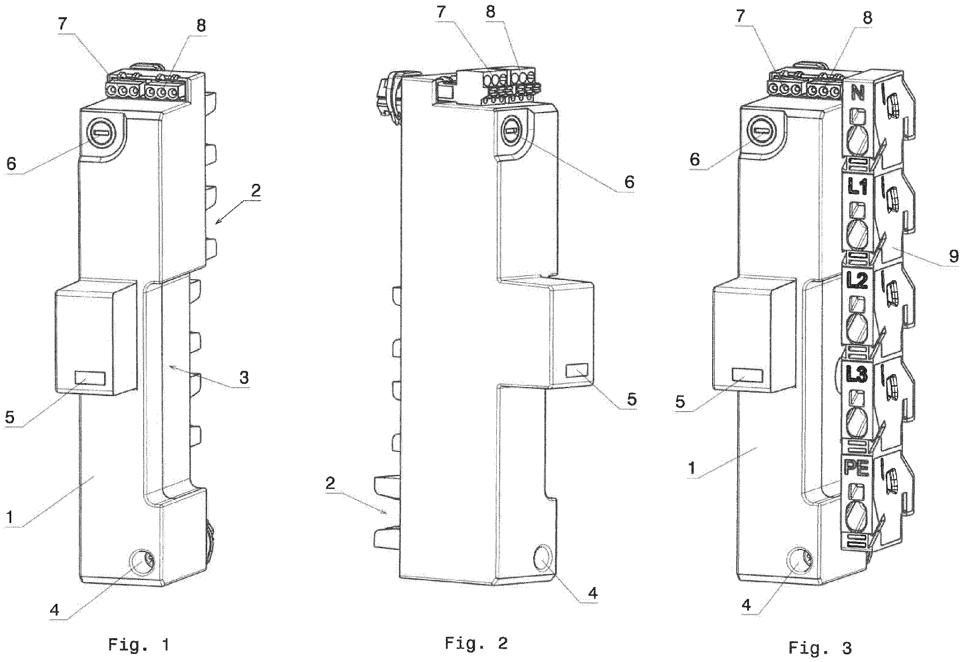

Fig. 1 zeigt eine perspektivische Ansicht eines Ausführungsbeispiels eines Überspannungsschutzgeräts gemäß der vorliegenden Erfindung. Das Überspannungsschutzgerät weist ein Gehäuse 1 auf, an dessen Rückseite ein Kupplungsbereich 2 zur mechanischen und elektrischen Kontaktierung einer Sammelschiene angeordnet ist. Der Kupplungsbereich 2 weist Kupplungsmittel auf, die in einem Rasterabstand eines Sammelschienensystems angeordnet sind und in bekannter Weise eine unmittelbare Montage auf einem Sammelschienensystem zur mechanischen und elektrischen Verbindung mit den Leiterschienen ermöglichen.

Die Kupplungsmittel sind beispielsweise so ausgebildet, dass sie ein unmittelbares mechanisches Verrasten des Überspannungsschutzgeräts auf das Sammelschienensystem ermöglichen und dabei gleichzeitig eine elektrische Kontaktierung der Leiterschienen herstellen, wie dies beispielsweise in der DE 20 2004 011 908 U1 beschrieben ist.

Im Inneren des Gehäuses 1 sind mehrere (nicht gezeigte) elektrisch verdrahtete Überspannungsableiter, insbesondere Funkenstrecken befindlich. Das Überspannungsschutzgerät gemäß den Figuren geht von einer Konfiguration eines Kombi-Ableiters mit mehreren integrierten und elektrisch verdrahteten Überspannungsableitern aus. Zurückgehend auf die DEHN + SÖHNE GmbH & Co. KG, Neumarkt/Opf./Deutschland, gehören mehrpolige Kombi-Ableiter für Hauptstromversorgungssysteme zum Stand der Technik. Derartige unter dem Markennamen "DEHNventil ZP" vertriebenen Kombi-Ableiter sind speziell für ein Sammelschienen-Anschlussfeld eines Zählerplatzes ausgelegt.

Neben der bekannten Funktion des Schutzes von Niederspannungsversorgungssystemen stellt das Überspannungsschutzgerät zudem eine Stromversorgung für eine externe Vorrichtung, insbesondere eine externe Mess- oder Regeleinheit wie ein SMG bereit. Wie in Fig. 1 zu sehen ist, weist das Überspannungsschutzgerät zu diesem Zweck an dem Gehäuse 1 einen Stromanschluss 7 auf, der einen Anschluss der externen Vorrichtung an einen Spannungsabgriff ermöglicht, der in das Überspannungsschutzgerät integriert ist. Der Spannungsabgriff ist über den Kupplungsbereich 2 ebenso wie die Überspannungsableiter mit dem Sammelschienensystem elektrisch und mechanisch koppelbar und ermöglicht so einen direkten Spannungsabgriff vor dem mit dem Überspannungsschutzgerät zu schützenden Niederspannungsversorgungssystem. Zur einfachen Verbindung mit der externen Vorrichtung ist der Spannungsabgriff über den Stromanschluss 7 an die Außenseite des Gehäuses 1 geführt, so dass nach der Installation des Überspannungsschutzgeräts die externe Vorrichtung direkt angeschlossen werden kann.

Um einen entsprechenden Schutz für die externe Vorrichtung bereitstellen zu können, weist der Spannungsabgriff einen Überstromschutz auf, der in dem vorliegenden Ausführungsbeispiel durch eine Sicherung 6 gebildet ist, die an dem Gehäuse 1 zugänglich ist und ausgewechselt werden kann, ohne das Überspannungsschutzgerät zu demontieren.

Das Überspannungsschutzgerät weist weiterhin eine Statusanzeige 5 zur optischen Anzeige eines Überspannungsereignisses auf, sowie einen PE-Anschluss 4. An einer Seitenwand des Gehäuses 1 weist das Überspannungsschutzgerät eine Aussparung 3 auf, die es erlaubt das Überspannungsschutzgerät und eine zugeordnete Einspeiseschiene für das zu schützende Niederspannungsversorgungssystem unabhängig voneinander montieren und demontieren zu können. Das Überspannungsschutzgerät weist ferner einen FM-Anschluss 8 für einen Wechsler auf.

Fig. 2 zeigt eine weitere perspektivische Ansicht des Überspannungsschutzgeräts aus Fig. 1. Die Anschlüsse 7 und 8 weisen hier Stecker mit einer PUSH-IN-Anschlusstechnik auf, die ein schnelles Anschließen externer Vorrichtungen ermöglichen.

Fig. 3 zeigt das Überspannungsschutzgerät aus Fig. 1 mit einer angrenzend angeordneten Einspeiseschiene 9, die in die Aussparung 3 des Gehäuses 1 ragt, wie bei einer typischen Einbausituation in einem Zählerschrank vorgesehen.

Der Spannungsabgriff weist die Sicherung 6 als Überstromschutz und den Anschluss 7 auf und ist in dem Überspannungsschutzgerät so mit dem Kupplungsbereich 2 verbunden, dass er im montierten Zustand des Überspannungsschutzgeräts die N-Schiene und die L1-Schiene kontaktiert, um einen Spannungsabgriff von diesen Schienen bereitzustellen. Es wäre ebenso möglich, das Überspannungsschutzgerät so zu konfigurieren, dass der Spannungsabgriff von anderen Stromschienen erfolgt.

### Bezugszeichenliste:

- 1: Gehäuse
- 2: Kupplungsbereich
- 3: Aussparung
- 4: PE-Anschluss
- 5: Statusanzeige
- 6: Sicherung
- 7: Stromanschluss
- 8: FM-Anschluss
- 9: Einspeiseschiene

## Patentansprüche

1. Überspannungsschutzgerät zur Installation an einer Sammelschiene, aufweisend ein Gehäuse (1) mit einem Kupplungsbereich (2) zum mechanischen und elektrischen Kontaktieren einer Sammelschiene, Überspannungsableiter zum Schutz von Niederspannungs-Versorgungssystemen, die mittels des Kupplungsbereichs (2) mit der Sammelschiene elektrisch verbindbar sind, sowie einen Spannungsabgriff, **dadurch gekennzeichnet, dass** der Spannungsabgriff mittels des Kupplungsbereichs (2) mit der Sammelschiene elektrisch verbindbar ist, um einen Spannungsabgriff zur Stromversorgung einer externen Vorrichtung, insbesondere einer externen Mess- oder Regeleinheit bereitzustellen, wobei der Spannungsabgriff einen Überstromschutz umfasst.

2. Überspannungsschutzgerät nach Anspruch 1, wobei der Überstromschutz eine wechselbare Sicherung (6) ist.

3. Überspannungsschutzgerät nach Anspruch 1 oder 2, wobei der Spannungsabgriff einen Stromanschluss (7) zum Anschluss einer externen Vorrichtung aufweist, der an dem Gehäuse (1) angeordnet ist.

## Claims

1. A surge protection device for installation on a busbar, comprising a housing (1) having a coupling area (2) for mechanically and electrically contacting a busbar, surge arresters for protecting low-voltage supply systems, which are adapted to be electrically connected to the busbar by means of the coupling area (2), and a voltage tap, **characterized in that** the voltage tap is adapted to be electrically connected to the busbar by means of the coupling area (2) in order to provide a voltage tap for supplying power to an external device, in particular an external measuring or control unit, wherein the voltage tap comprises an overcurrent protector.

2. The surge protection device according to claim 1, wherein the overcurrent protector is a replaceable fuse (6).

3. The surge protection device according to claim 1 or 2, wherein the voltage tap includes a power connection (7) which is arranged on the housing (1), for connecting an external device.

## Revendications

1. Appareil de protection contre les surtensions pour l'installation sur une barre collectrice, présentant un boîtier (1) qui comprend une zone de couplage (2) pour l'établissement d'un contact mécanique et électrique avec une barre collectrice, des parasurtenseurs pour la protection de systèmes d'alimentation basse tension qui sont aptes à être électriquement reliés à la barre collectrice par l'intermédiaire de la zone de couplage (2), et une prise de tension, **caractérisé en ce que** la prise de tension est apte à être électriquement reliée à la barre collectrice par l'intermédiaire de la zone de couplage (2) pour fournir une prise de tension pour l'alimentation électrique d'un dispositif externe, en particulier d'une unité de mesure ou de régulation externe, la prise de tension comprenant une protection contre un courant de surcharge.

2. Appareil de protection contre les surtensions selon la revendication 1, dans lequel la protection contre un courant de surcharge est un fusible (6) remplaçable.

3. Appareil de protection contre les surtensions selon la revendication 1 ou 2, dans lequel la prise de tension présente un raccordement électrique (7) agencé sur le boîtier (1) pour le raccordement d'un dispositif externe.
